# EUROPÄISCHE PATENTANMELDUNG

(11) **EP 3 239 558 A1**
(43) Veröffentlichungstag der Anmeldung: **01.11.2017**
(21) Anmeldenummer: 17159793.3
(22) Anmeldetag: 08.03.2017
(51) Int. Cl.: F16H 1/28

(54) **AKTUATOR FÜR DEN EINSATZ IM KFZ-BEREICH**

(30) Priorität: 29.04.2016 DE 102016108010
(71) Anmelder: Pierburg GmbH, 41460 Neuss (DE)
(72) Erfinder: MÜNICH, Marc-Anton, 14476 Potsdam (DE); UHLENDORF, Ringo, 10715 Berlin (DE); SOLZBACHER, Frank, 12053 Berlin (DE)
(74) Vertreter: Patentanwälte ter Smitten Eberlein-Van Hoof Rütten Partnerschaftsgesellschaft mbB

(57) **Zusammenfassung**

Aktuator für den Einsatz im KFZ-Bereich mit einem mehrteiligen Gehäuse (6), das einen elektrischen Antriebsmotor (14), eine Sensorvorrichtung (40) und ein hoch untersetzendes Getriebe (18) sowie eine durch den Antriebsmotor (14) über das Getriebe (18) angetriebene Abtriebswelle (34) aufweist, wobei das Getriebe (18) als Umlaufradgetriebe ausgebildet ist, wobei ein Stirnzahnrad (16) mit einer ersten Drehachse auf jeweils eine äußere Verzahnung (20, 22) zweier Kronenräder (24, 26) angreift, die eine zweite Drehachse besitzen, wobei die erste Drehachse senkrecht zur zweiten Drehachse verläuft, wobei die Abtriebswelle (34) koaxial zur zweite Drehachse verläuft und drehbar auf der Abtriebswelle (34) gelagerte Planetenzahnräder (42) auf eine radial innere Verzahnung (46, 48) der Kronenräder (24, 26) angreifen, wobei im Gehäuse (6) ein erstes und ein zweites Lagerorgan (30, 32) vorgesehen sind, in denen die Abtriebswelle (34) gelagert ist und auf deren Außenseite (28, 33) die Kronenräder (24, 26) gelagert sind.

## Beschreibung

Die Erfindung betrifft einen Aktuator für den Einsatz im KFZ-Bereich mit einem mehrteiligen Gehäuse, das einen elektrischen Antriebsmotor, eine Sensorvorrichtung und ein hoch untersetzendes Getriebe sowie eine durch den Antriebsmotor über das Getriebe angetriebene Abtriebswelle aufweist.

Derartige Aktuatoren sind im KFZ-Bereich hinlänglich bekannt. Sie dienen dem Antrieb von Klappenventilen, Verstellvorrichtungen, Verriegel- und Endriegelvorrichtungen sowie zur Ausführung von Positionieraufgaben. Ein Beispiel für einen derartigen Aktuator findet sich in der DE 10 2004 054 910 B4. Dieser Aktuator weist einen relativ komplizierten und aufwendigen Aufbau auf. Zudem müssen viele Bauteile verwendet werden, um die hohe Untersetzung auf die Abtriebswelle zu gewährleisten. Es sei angemerkt, dass aus der DE 100 63 467 B4 ein als Umlaufradgetriebe ausgebildetes, kompaktes Getriebe bekannt ist, wobei insbesondere dieses Getriebe den Nachteil aufweist, dass zusätzliche externe Lagermittel vorzusehen sind, um das Getriebe in Kombination mit einem Antriebsmotor als Aktuator zur Verstellung von Bauteilen einzusetzen.

Aufgabe der Erfindung ist es daher, einen äußerst kompakten, aus wenigen Bauteilen aufgebauten Aktuator bereitzustellen, der die oben genannten Nachteile vermeidet.

Diese Aufgabe wird dadurch gelöst, dass das Getriebe als Umlaufradgetriebe ausgebildet ist, wobei ein Stirnzahnrad mit einer ersten Drehachse auf jeweils eine äußere Verzahnung zweier Kronenräder angreift, die eine zweite Drehachse besitzen, wobei die erste Drehachse senkrecht zur zweiten Drehachse verläuft, wobei die Abtriebswelle koaxial zur zweite Drehachse verläuft und drehbar auf der Abtriebswelle gelagerte Planetenzahnräder auf eine radial innere Verzahnung der Kronenräder angreifen, wobei im Gehäuse ein erstes und ein zweites Lagerorgan vorgesehen sind, in denen die Abtriebswelle gelagert ist und auf deren Außenseite die Kronenräder gelagert sind. Hierdurch wird ein besonders kompakter und belastbarer Aktuator mit einer hohen Untersetzung vom Antriebsmotor zur Abtriebswelle bereitgestellt. Auch bei einseitiger Belastung der Abtriebswelle ist die Getriebefunktion nicht beeinträchtigt.

In einer besonders vorteilhaften kompakten Ausführungsform ist das mindestens eine Lagerorgan als ein in ein Lagergehäuseteil des Gehäuses integriertes Gleitlager ausgebildet. Die Bauteileanzahl wird hierdurch noch einmal minimiert, wobei des Weiteren eine einfache Montage gewährleistet ist, die zudem eine genaue Koaxialität des mindestens einen Kronenrades zur Abtriebswelle gewährleistet.

Hierbei ist das Lagerorgan in vorteilhafter Weise als ringförmiges Ansatzstück ausgebildet, wobei das Kronenlager auf der Außenseite dieses Ansatzstückes gelagert ist und die Abtriebswelle im Innenteil des Ansatzstückes gelagert ist.

In vorteilhafter Weise kann das Lagergehäuseteil als Deckelelement ausgebildet sein, wodurch die Montage noch einmal vereinfacht wird. Zudem kann an dem Lagergehäuseteil an der von dem Getriebe abgewandten Seite eine berührungslose Sensorvorrichtung vorgesehen sein. Alternativ kann auch der Antriebsmotor eine berührungslose 5ensorvorrichtung aufweisen.

In vorteilhafter Weise ist das zweite Lagerorgan als Wälzlager auszubilden.

Die Erfindung wird nachstehend anhand einer Zeichnung näher erläutert, hierbei zeigt:
Figur 1 eine Explosionsansicht eines erfindungsgemäßen Aktuators, und
Figur 2 eine perspektivische Seitenansicht des erfindungsgemäßen Gehäuseteils, wobei lediglich ein Lagergehäusedeckel eines mehrteiligen Gehäuses dargestellt ist.

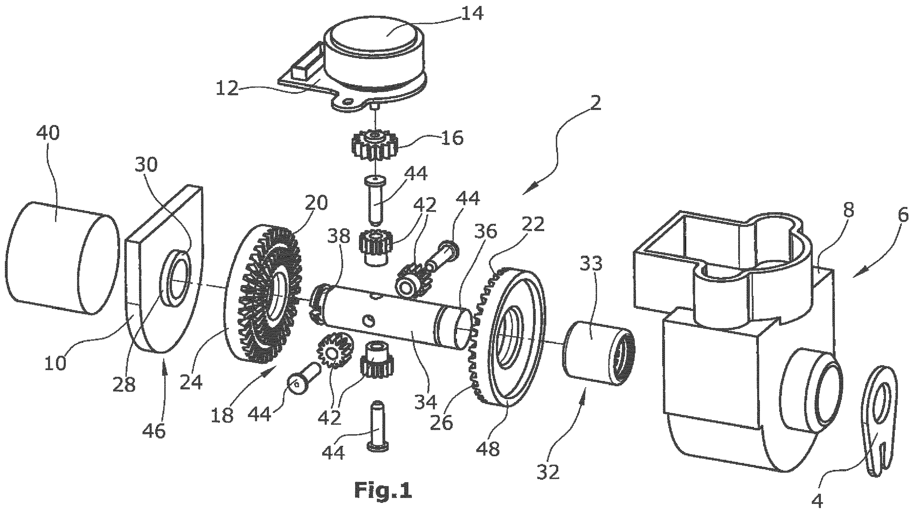

Figur 1 zeigt in einer Explosionsansicht einen erfindungsgemäßen Aktuator 2 für den Einsatz im KFZ-Bereich. Im vorliegenden Ausführungsbeispiel dient der Aktuator 2 zum Antrieb einer lediglich durch einen Verstellhebel 4 angedeuteten Verstellvorrichtung. Der Aktuator 2 besitzt ein mehrteiliges Gehäuse 6, das im Wesentlichen durch ein Hauptgehäuseteil 8, ein als erstes Deckelelement ausgebildetes Lagergehäuseteil 10 und ein als Antriebsmotoraufnahmeteil ausgebildetes zweites Deckelelement 12 aufgebaut ist. Am Antriebsmotoraufnahmetell 12 ist ein Antriebsmotor 14 vorgesehen. Im vorliegenden Ausführungsbeispiel ist der Antriebsmotor 14 an der vom Hauptgehäuseteil 8 abgewandten Seite des Antriebsmotoraufnahmeteils 12 angeordnet. Es ist natürlich auch möglich, den Antriebsmotor auf der entgegengesetzten Seite des Antriebsmotoraufnahmeteils 12 vorzusehen. Der Antriebsmotor 14 ist auf bekannte Weise antriebstechnisch mit einem Antriebsritzel, das als Stirnzahnrad 16 ausgebildet ist, verbunden. Das Antriebsritzel 16 ist Teil eines Getriebes 18, das als Umlaufradgetriebe ausgebildet ist. Hierbei steht das Antriebsritzel 16 mit jeweils äußeren Verzahnungen 20, 22 zweier Kronenräder 24, 26 in Eingriff. Erfindungsgemäß ist das Kronenrad 24 auf einer Außenseite 28 eines ringförmigen Ansatzstückes 30 des Lagergehäuseteils 10 gelagert. Dieses Lagerorgan 30 ist hierdurch als ein in das Lagergehäuseteil 10 integriertes Gleitlager ausgebildet. Mit dem Bezugszeichen 32 ist ein zweites Lagerorgan bezeichnet, das als Wälzlager ausgebildet ist und im Hauptgehäuseteil 8 vorgesehen ist. Auf dessen Außenseite 33 ist das Kronenrad 26 gelagert. Es ist natürlich auch denkbar, auch das zweite Lagerorgan 32 als im Hauptgehäuseteil 8 integriertes Gleitlager auszubilden.

Im ersten Lagerorgan 30 und im zweiten Lagerorgan 32 ist eine Abtriebswelle 34 gelagert, die mit einem ersten Ende 36 mit dem Abtriebshebel 4 in Eingriff steht und mit einem zweiten Ende 38 in eine berührungslose Sensorvorrichtung 40 hineinreicht, die auf der vom Kronenrad 24 abgewandten Seite des Lagergehäuseteils 10 angeordnet ist. Durch die berührungslose Sensorvorrichtung 40 wird auf bekannte Weise der Verstellweg und die Verstellrichtung der Abtriebswelle 34 und damit des Abtriebshebels 4 detektiert. Alternativ kann auch der Antriebsmotor eine berührungslose Sensorvorrichtung aufweisen. Hier wird dann der Verstellweg und die Verstellrichtung der Abtriebswelle 34 indirekt ermittelt.

Auf der Abtriebswelle 34 sind gemäß dem vorliegenden Ausführungsbeispiel vier Planetenzahnräder 42 mittels Drehstiften 44 drehbar gelagert. Die vier Planetenzahnräder 42 stehen mit jeweils einer inneren Verzahnung 46, 48 des Kronenrades 24 und 26 in Eingriff.

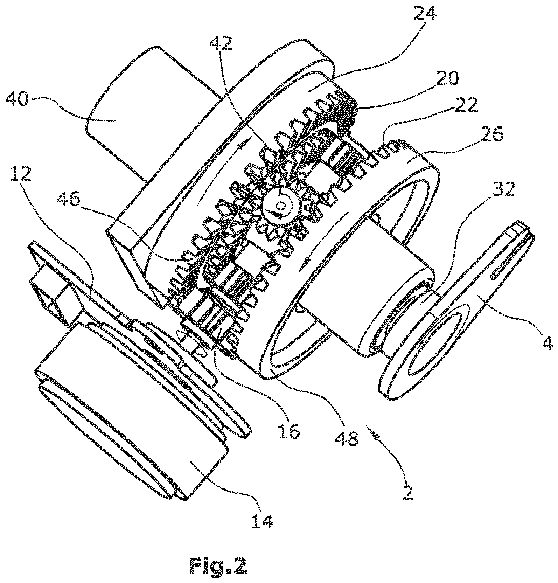

Figur 2 zeigt nun in einer perspektivischen Seitenansicht den Aktuator 2 aus Figur 1. Der Elektromotor 14 reibt das Antriebsritzel 16 in die durch den Pfeil angezeigte Drehrichtung an. Das Antriebsritzel 16 treibt über die äußeren Verzahnungen 20, 22 die Kronenräder 24, 26 in die angegebene Drehrichtung an. Die Drehbewegung wird durch die innere Verzahnung 46, 48 auf die Planetenzahnräder 42 übertragen, deren Abrollbewegung die Abtriebswelle 34 antreibt und eine Drehbewegung in der angezeigten Drehrichtung verursacht.

Hierbei ist anzumerken, dass bei gleichen Zähnezahlen an beiden äußeren Verzahnungen 20, 22 die Kronenräder 24, 26 sich um ihre Drehachse drehen, ohne die Planetenzahnräder 42 in Umlaufbewegung zu zwingen, so dass die Abtriebswelle still stehen würde. Ein geringer Unterschied an Zähnezahlen der äußeren Verzahnungen 20, 22 führt zu einem geringen Unterschied der Drehbewegungen der Kronenräder 24, 26 und folglich zu einer Drehbewegung der Abtriebswelle 42. Ein größerer Unterschied der Zähenzahlen der äußere Verzahnungen 20, 22 führt folglich zu einer stärkeren Drehbewegung der Abtriebswelle 42.

## Patentansprüche

1. Aktuator für den Einsatz im KFZ-Bereich mit einem mehrteiligen Gehäuse (6), das einen elektrischen Antriebsmotor (14), eine Sensorvorrichtung (40) und ein hoch untersetzendes Getriebe (18) sowie eine durch den Antriebsmotor (14) über das Getriebe (18) angetriebene Abtriebswelle (34) aufweist, **dadurch gekennzeichnet, dass** das Getriebe (18) als Umlaufradgetriebe ausgebildet ist, wobei ein Stirnzahnrad (16) mit einer ersten Drehachse auf jeweils eine äußere Verzahnung (20, 22) zweier Kronenräder (24, 26) angreift, die eine zweite Drehachse besitzen, wobei die erste Drehachse senkrecht zur zweiten Drehachse verläuft, wobei die Abtriebswelle (34) koaxial zur zweite Drehachse verläuft und drehbar auf der Abtriebswelle (34) gelagerte Planetenzahnräder (42) auf eine radial innere Verzahnung (46, 48) der Kronenräder (24, 26) angreifen, wobei im Gehäuse (6) ein erstes und ein zweites Lagerorgan (30, 32) vorgesehen sind, in denen die Abtriebswelle (34) gelagert ist und auf deren Außenseite (28, 33) die Kronenräder (24, 26) gelagert sind.

2. Aktuator nach Anspruch 1, **dadurch gekennzeichnet, dass** mindestens eine Lagerorgan (30) als ein in ein Lagergehäuseteil (10) des Gehäuses (6) integriertes Gleitlager ausgebildet ist.

3. Aktuator nach Anspruch 2, **dadurch gekennzeichnet, dass** das Lagerorgan (30) als ringförmiges Ansatzstück ausgebildet ist.

4. Aktuator nach Anspruch 2 oder 3, **dadurch gekennzeichnet, dass** das Lagergehäuseteil (10) als Deckelelement ausgebildet ist.

5. Aktuator nach einem der Ansprüche 2 - 4, **dadurch gekennzeichnet, dass** an dem Lagergehäuseteil (10) an der von dem Getriebe (18) abgewandten Seite eine berührungslose Sensorvorrichtung (40) vorgesehen ist.

6. Aktuator nach einem der Ansprüche 2 - 4, **dadurch gekennzeichnet, dass** der Antriebsmotor (14) eine berührungslose Sensorvorrichtung aufweist.

7. Aktuator nach einem der vorhergehenden Ansprüche, **dadurch gekennzeichnet, dass** das zweite Lagerorgan (32) als Wälzlager ausgebildet ist.
